# EUROPEAN PATENT SPECIFICATION

(11) **EP 4 071 212 B1**
(45) Date of publication and mention of the grant of the patent: **15.07.2026**
(21) Application number: 20897115.0
(22) Date of filing: 19.10.2020
(51) Int. Cl.: C08L 23/06, C08L 5/08, C08L 1/02, C08J 5/18, C08L 3/02, C08L 67/02, C08L 23/08, C08L 23/0807, C08L 101/16, B29B 7/38, B29B 7/72, B29B 7/88, B29B 7/92

(54) **BIODEGRADABLE RESIN COMPOSITION AND PRODUCTION METHOD THEREFOR**
BIOLOGISCH ABBAUBARE HARZZUSAMMENSETZUNG UND HERSTELLUNGSVERFAHREN DAFÜR
COMPOSITION DE RÉSINE BIODÉGRADABLE ET SON PROCÉDÉ DE PRODUCTION

(30) Priority: 04.12.2019 KR 20190159946
(43) Date of publication of application: 12.10.2022
(73) Proprietor: Hanwha Solutions Corporation, Jung-gu Seoul 04541 (KR)
(72) Inventor: LIM, Yu Jeong, Daejeon 34128 (KR); JEONG, Yu Jeong, Daejeon 34128 (KR); PARK, Jeong Hyun, Daejeon 34128 (KR); JANG, Jae Kyu, Daejeon 34128 (KR)
(74) Representative: Klunker IP Patentanwälte PartG mbB
(86) International application number: PCT/KR2020/014257
(87) International publication number: WO 2021/112396

(56) References cited:
- CN-A- 110 511 544
- JP-A- 2013 067 128
- KR-A- 20170 073 819
- KR-A- 20170 075 052
- KR-A- 20180 023 037
- KR-A- 20190 067 320
- US-A1- 2012 315 454
- US-A1- 2014 199 557

## Description

### TECHNICAL FIELD

The present invention relates to a biodegradable resin composition and a production method therefor, and more particularly, to a technique for improving biodegradability by including polyethylene, a biodegradable resin, and polybutylene adipate terephthalate (PBAT).

### BACKGROUND ART

Since plastic has excellent physical properties and cheap and light characteristics, various polymers have been developed centering on plastic beyond the limits of natural materials to built a modern scientific civilization. Plastic is characterized by being strong, light and tough and not easily decomposing. Due to these properties, plastic is used in various ways from industrial materials to disposable materials. Research has been conducted for a long time to further improve the toughness and durability of synthetic resins such as plastic, and these efforts are still ongoing. However, environmental pollution caused by plastic waste that is getting serious is a problem. For example, due to the detection of highly toxic dioxins, the leakage of environmental hormones, and the like, not only the social demand for eco-friendly plastic but also the standards of each country's legal regulations on the use of non-degradable plastic are getting stronger. In order to solve this problem, the development of biodegradable polymers is being treated as a very important matter, and is attracting attention as an important field in the plastic industry.

In general, according to the American Society for Testing and Materials (ASTM), degradable plastic refers to plastic whose chemical structure is significantly changed for a certain period of time under specific environmental conditions, so that the change in properties may be measured by standard test methods. Degradable plastic may be divided into photodegradable plastic, biodestructible plastic, and biodegradable plastic.

More specifically, photodegradable plastic refers to plastic that is decomposed by light in the form of photooxidation or ketone photolysis. However, since photodegradable plastic is decomposed by light, there is a disadvantage in that photodegradable plastic is not decomposed when buried in the ground where light is blocked. Biodestructible plastic refers to partially degradable plastic produced by adding a certain amount of biodegradable material such as starch to non-degradable general-purpose resin (polyethylene, polypropylene, etc.). In Korea, in order to avoid confusion with biodegradable plastic, the term "biodestructible plastic" is used to distinguish from biodegradable plastic. Biodegradable plastic generally refers to plastic that is completely decomposed by itself into water and carbon dioxide or water and methane gas by microorganisms present in nature, such as bacteria, algae, and mold.

In the past, photodegradable plastic or biodestructible plastic has been mainly used. Recently, the development of biodegradable plastic has been treated as an important issue. Biodegradable plastic distinguishes from the existing petroleum-based plastic because of the use of natural plant resources in terms of the raw material, and may provide cleanliness that is completely decomposed into only water and carbon dioxide by microorganisms in nature. Therefore, It is a global trend to develop biodegradable plastic as mainstream.

For example, Korean Patent Publication No. 10-2018-0023037 discloses a thermoplastic film composition including a polymer blend of an immiscible polymer component. The composition includes a plasticized natural polymer, a polyolefin, a biodegradable polymer, and a compatibilizing agent in the same polymer molecule. A plasticized natural component and a biodegradable polymer component form a majority phase, and a petroleum-based olefin polymer forms a minority phase. It is also mentioned that the composition can be produced into a film including a renewable natural polymer component.

As another example, Korean Patent Publication No. 10-2017-0075052 discloses a resin composition for a mulching film and a film therefor, wherein the resin composition for a mulching film includes: (i) a biodegradable resin; (ii) starch in which at least one of hydroxyl groups (-OH groups) of a glucose unit is hydrophobized with a silane; and (iii) one or more compatibilizing agents selected from the group consisting of a graft copolymer in which maleic anhydride (MA) is grafted on a biodegradable polymer, an epoxidized oil, and a multifunctional compound having an epoxy group. Accordingly, the processability and mulching functionality of the film may be improved, and the tensile strength and tensile elongation of the film are improved.
US 2014/199557 A1 teaches a stretch film product with which the film itself has consistent stretchability (elasticity) and the entire film can be subjected to waste treatment by biodegradation without being incinerated at the time of waste disposal. The stretch film product has a layer adhered on at least one surface of a base film. The base film contains a resin blend (A+B), which is produced by blending polyester biodegradable resin (A) and polyethylene (B), that further contains a starch or a starch derivative. The mixture ratio [B/(A+B)] of polyethylene (B) in the resin blend (A+B) is 60 to 90%. The adhesive layer comprises a binder resin and polybutene. CN 110 511 544 A relates to the technical field of degradable breathable composite membranes, in particular to a biodegradable breathable composite membrane and a preparation method thereof. The biodegradable breathable composite membrane comprises the following preparation raw materials: PE resin, modified porous starch, PBAT resin, a compatilizer, a lubricant, a weather-proof agent and an anti-blocking agent. The biodegradable breathable composite membrane adopts PE and PBAT as the matrix resin, the porosity and biodegradability of modified porous starch are utilized to develop the biodegradable breathable composite membrane to solve the disadvantages of uneven pore diameter of holes, poor breathability, non-degradability and the like, and the biodegradable breathable composite membrane can be widely applied to fruits and vegetables, seafood storage, transportation and other fields.

Most of the above patents include a two-component resin, and thus, there is somewhat limitation in showing complete biodegradability. Therefore, research and development is still needed in order to provide better physical properties and excellent biodegradability. The present invention has also been completed after a long research in order to satisfy these requirements.
(Patent Literature 1) Korean Patent Publication No. 10-2018-0023037 (2018.03.06.)
(Patent Literature 2) Korean Patent Publication No. 10-2017-0075052 (2017.07.03.)
(Patent Literature 3) US 2014/199557 A1
(Patent Literature 4) CN 110 511 544 A

### DESCRIPTION OF EMBODIMENTS

### TECHNICAL PROBLEM

The present invention aims to solve the above-described problems.

An object of the present invention is to improve the compatibility of a biodegradable resin composition and improve the degradability of polyethylene.

An object of the present invention is to provide a film including the biodegradable resin composition so as to be applied to various fields such as industrial, food, and agricultural fields.

### SOLUTION TO PROBLEM

In order to achieve the above-described objects of the present invention and achieve the characteristic effects of the present invention has the following characteristics as described below and as defined in the appended claims
Accordingly, the present invention relates to a biodegradable resin composition comprising polyethylene in an amount ranging from 40-60 wt%, 15-40 wt% of a biodegradable resin, and 15-40 wt% of polybutylene adipate terephthalate (PBAT), wherein the biodegradable resin comprises at least one selected from thermoplastic starch (TPS), polylactic acid (PLA), polycaprolactone (PCL), polybutylene succinate (PBS), polyglycolic acid (PGA), polyhydroxyalkanoate (PHA), polyhydroxybutyrate (PHB), cellulose, and chitin, and wherein the biodegradable resin composition has a weight change of 20% or more.

### ADVANTAGEOUS EFFECTS OF DISCLOSURE

A biodegradable resin composition according to the present invention provides a combination of three components including polyethylene, a biodegradable resin, and polybutylene adipate terephthalate (PBAT) to provide an effect of improving compatibility and thus improving the degradability of polyethylene.

A film including the biodegradable resin composition according to the present invention can be applied to various fields such as industrial, food, and agricultural fields, and provides an effect of contributing to solving environmental problems by providing excellent biodegradability.

### BRIEF DESCRIPTION OF DRAWINGS

FIG. 1 is a data value showing a reduction in molecular weight according to Example 1.
FIG. 2 is a data value showing a reduction in molecular weight according to Example 2.
FIG. 3 is a data value showing a reduction in molecular weight according to Example 3.

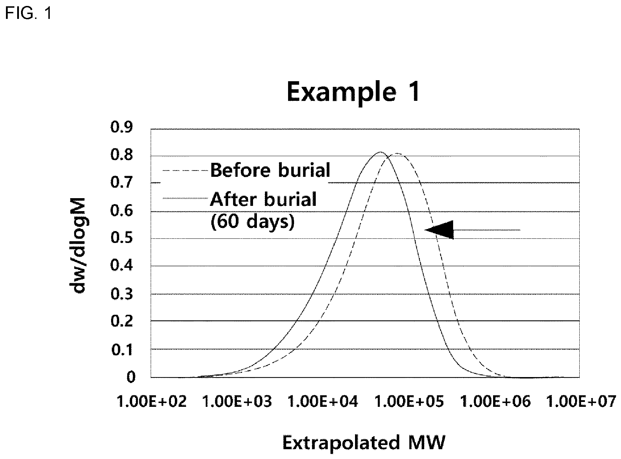

FIG. 1 is a data value showing a reduction in molecular weight according to Comparative Example 1.

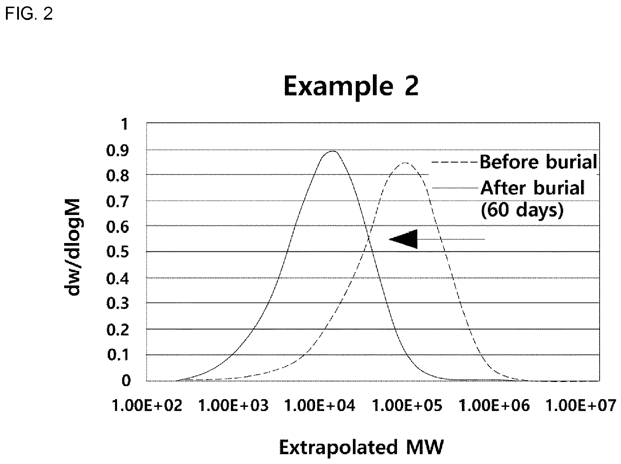

FIG. 2 is a data value showing a reduction in molecular weight according to Comparative Example 2.

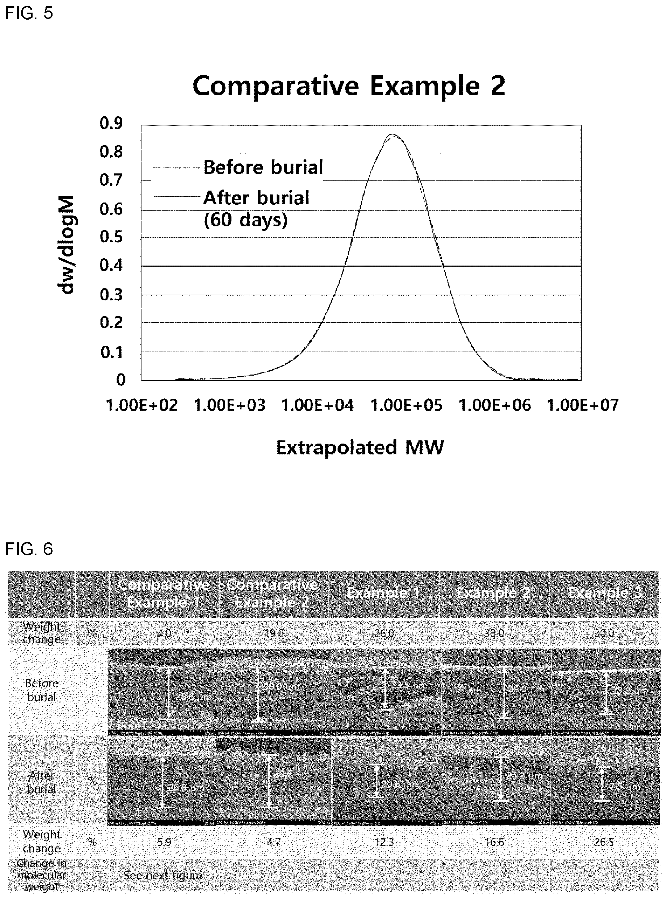

FIG. 6 is a photograph comparing the degradability of films including resin compositions according to Examples and Comparative Examples.

### BEST MODE

Hereinafter, the structure and operation of the present invention will be described in more detail with reference to preferred examples of the present invention. However, these examples are shown by way of illustration and should not be construed as limiting the present invention in any sense.

Since contents not described herein can be sufficiently technically inferred by those of ordinary skill in the art, descriptions thereof will be omitted.

### Example 1

45 wt% of LLDPE (M2010EA available from Hanwha Chemical), 15 wt% of PBAT (SOLPOL-1000 available from GIOSOLTEC), and 40 wt% of TPS (Bionyl availalbe from Daesang) were mixed to produce a mixture as shown in Table 1 below.

The produced mixture was placed in an extruder and heated at a mixing zone temperature of 190°C to produce a biodegradable resin composition. The biodegradable resin composition was immediately extruded to produce a blown film. In this case, blown film processing conditions were a screw of 40 mmΦ, a die of 75 mmΦ, and a die gap of 2 mm. A screw speed was 180 rpm.

### Example 2

The same as Example 1 was performed except that 25 wt% of PBAT (SOLPOL-1000 available from GIOSOLTEC) and 30 wt% of TPS were included.

### Example 3

The same as Example 1 was performed except that 40 wt% of PBAT (SOLPOL-1000 available from GIOSOLTEC) and 15 wt% of TPS were included.

### Comparative Example 1

The same as Example 1 was performed except that a biodegradable resin composition included 45 wt% of LLDPE (M2010EA available from Hanwha Chemical) and 55 wt% of TPS (Bionyl available from Daesang).

### Comparative Example 2

The same as Example 1 was performed except that 45 wt% of LLDPE (M2010EA available from Hanwha Chemical) and 55 wt% of PBAT (SOLPOL-1000 available from GIOSOLTEC).

**[Table 1]**

| Classification | Comparative Example 1 | Comparative Example 2 | Example 1 | Example 2 | Example 3 |
|---|---|---|---|---|---|
| LLDPE | 45 | 45 | 45 | 45 | 45 |
| PBAT | - | 55 | 15 | 25 | 40 |
| TPS | 55 | - | 40 | 30 | 15 |

### Experimental Example

Films of Examples and Comparative Examples having composition ratios shown in Table 1 were buried in soil, and changes in molecular weight, weight, and thickness ratio were observed before and after burial. For the buried conditions, it is important to have a constant temperature and a moisture content that can activate the growth of microorganisms. A temperature of 58°C and a moisture content of 50% are maintained using a thermo-hygrostat under standard composting conditions.

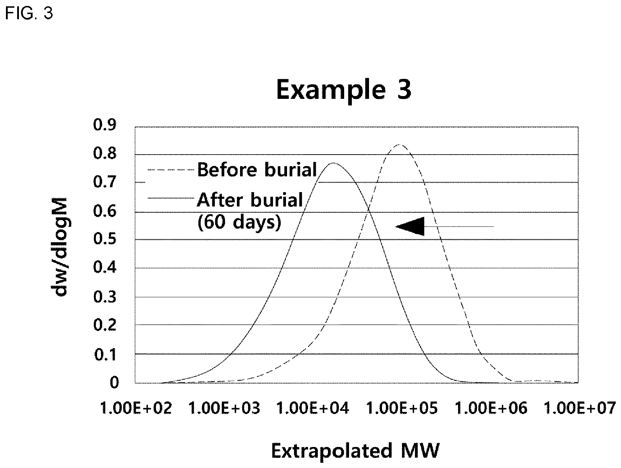

In addition, the experiment was conducted after 60 days from the burial day. Thereafter, the reduction in molecular weight is shown in FIGS. 1 to 5, and the change in weight and thickness ratio of the film is shown in FIG. 6.

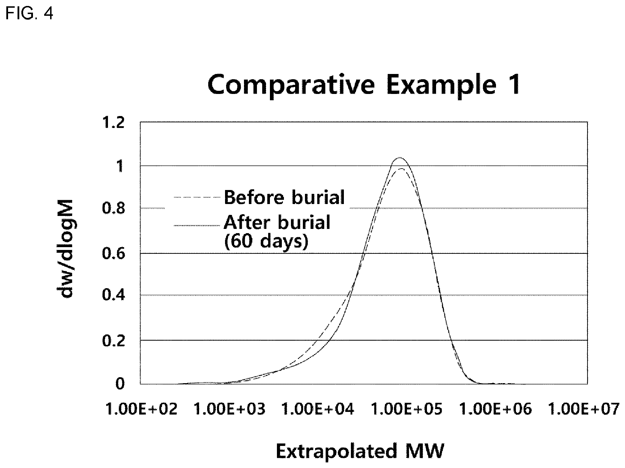

Referring to the results of FIGS. 1 to 3, which are the results of Examples according to the present invention, it was confirmed that the molecular weight after 60 days of burial was significantly reduced, compared to FIGS. 4 and 5, which are the results of Comparative Examples 1 and 2. In particular, in the case of Examples 2 and 3, it was confirmed that the graph value shifted from 1.00E+05 to 1.004E+04. In view of the fact that the molecular weight of polyethylene was 1,000,000 g/mol, the excellent degradability effect of polyethylene was confirmed through the great reduction in molecular weight. In addition, it was confirmed that excellent biodegradability could be provided although the amount of non-degradable polyethylene was as relatively high as 45 wt%.

In addition, referring to the results of FIG. 6, in the case of Examples 1 to 3 according to the present invention, it was confirmed that the thickness change rates of the film were twice or more higher than the thickness change rates of Comparative Examples 1 and 2. In addition, a weight change was 20% or more, and an excellent biodegradability effect could be confirmed.

Therefore, the present invention provides the resin composition including three components, polyethylene, a biodegradable resin, and polybutylene adipate terephthalate (PBAT), thereby providing an effect of improving compatibility and thus improving degradability of polyethylene.

Moreover, the film including the biodegradable resin composition according to the present invention can be applied to various fields such as industrial, food, and agricultural fields, and can be expected to contribute to solving environmental problems by providing excellent biodegradability.

### MODE OF DISCLOSURE

Reference is made to the accompanying drawing which shows, by way of illustration, specific embodiments in which the present invention may be practiced. The embodiments will be described in detail in such a manner that the present invention can be carried out by those of ordinary skill in the art.

Hereinafter, preferred embodiments of the present invention will be described in detail with reference to the accompanying drawing, so that those of ordinary skill in the art can easily carry out the present invention.

"Biodegradable" in the present invention means plastic that is decomposed into water and CO₂ or CH₄ by microorganisms such as bacteria, algae, and mold. It means that the molecular weight is reduced by cutting the main chain of the polymer as well as the physical breakdown of molded products such as plastic.

According to an embodiment of the present invention, a biodegradable resin composition is provided through a compound combination of three components including polyethylene, a biodegradable resin, and polybutylene adipate terephthalate (PBAT).

Although polyethylene is inexpensive and has excellent mechanical properties and processability, it is a major cause of environmental pollution due to its non-degradable properties. Therefore, in the present invention, the biodegradable resin composition is provided by including the biodegradable resin and the polybutylene adipate terephthalate (PBAT) in order to improve biodegradability while maintaining excellent mechanical properties and processability of polyethylene

According to the present invention, a biodegradable resin composition is provided by including 40-60 wt% of polyethylene, 15-40 wt% of a biodegradable resin, and 15-40 wt% of polybutylene adipate terephthalate (PBAT). Preferably, the biodegradable resin composition is provided by including 40-60 wt% of polyethylene, 20-40 wt% of a biodegradable resin, and 15-30 wt% of polybutylene adipate terephthalate (PBAT).

When the amount of the polyethylene is greater than 60 wt%, there is a problem in biodegradability effect, and when the amount of the polyethylene is less than 40 wt%, there is a limitation in providing excellent mechanical properties that can be provided by conventional plastics. When the amount of the biodegradable resin is greater than 40%, there is a problem in that tensile strength, elongation, and drop impact strength are reduced, and when the amount of the biodegradable resin is less than 15%, it is disadvantageous in terms of cost reduction. When the amount of the polybutylene adipate terephthalate (PBAT) is greater than 40%, there is a limitation in processability and compatibility with polyethylene, and when the amount of the polybutylene adipate terephthalate (PBAT) is less than 15 wt%, the biodegradability effect thereby is insignificant. Therefore, when the combination of the three components is provided in the above range, it can be confirmed that the biodegradability is excellent in the above range. This can be confirmed with reference to the results of the drawings to be described below.

According to an embodiment of the present invention, the polyethylene is provided by including at least one selected from high density polyethylene (HDPE), very-low-density polyethylene (VLDPE), low density polyethylene (LDPE), medium density polyethylene (MDPE), linear low density polyethylene (LLDPE), and ethylene-vinyl acetate copolymer (EVA). Preferably, linear low density polyethylene (LLDPE) may provide excellent impact resistance and durability.

According to an embodiment of the present invention, the polyethylene has a weight average molecular weight of hundreds of thousands to millions. The polyethylene has a weight average molecular weight of100,000 to 1,000,000, and preferably 100,000 to 300,000.

According to the present invention, the biodegradable resin includes at least one selected from thermoplastic starch (TPS), polylactic acid (PLA), polycaprolactone (PCL), polybutylene succinate (PBS), polyglycolic acid (PGA), polyhydroxyalkanoate (PHA), polyhydroxybutyrate (PHB), cellulose, and chitin. Preferably, thermoplastic starch (TPS) may be provided.

The polylactic acid, the polycaprolactone, the polybutylene succinate, and the polyglycolic acid are aliphatic polyesters, and have excellent biodegradability by microorganisms and provide properties such as biocompatibility. In particular, since the polyglycolic acid has excellent mechanical properties such as high strength and high heat resistance, polyglycolic is particularly widely used in medical applications.

The polyhydroxyalkanoate corresponds to polyester and has excellent biodegradability and excellent degradability under any conditions such as aerobic, anaerobic, and composting conditions. In addition, the polyhydroxybutyrate is a natural polyester, belongs to polyhydroxyalkanoate, and is a homopolymer in which D-3-hydroxy-butyric acid is linearly linked. The polyhydroxybutyrate provides biological functions such as starch or glycogen as an energy store synthesized in cells by a wide variety of bacteria.

The cellulose, the chitin, and the natural polymer-based polymers may be provided as eco-friendly materials due to their excellent biodegradability, easy supply, and non-toxic properties.

The thermoplastic starch is obtained from plants and refers to a granular material including two components, amylose and amylopectin. For example, the thermoplastic starch is provided by including at least one selected from rice starch, wheat starch, corn starch, sweet potato starch, potato starch, tapioca starch, cassava starch, and modified starches thereof. The modified starch may be provided as α-starch, acid-treated starch, oxidized starch, cationic starch, ester starch, ether starch, and the like, in which starch is physically or chemically treated. The starch has excellent biodegradability and includes amylose and amylopectin. Since glucose of amylose contains a hydroxy (-OH) group, the starch has hydrophilicity and hydrogen bonding.

According to an embodiment of the present invention, the polybutylene adipate terephthalate (PBAT) is a biodegradable resin and also acts as a compatibilizing agent. In general, polyolefins are non-polar in chemical nature, and has a problem in compatibility due to low kneading properties with polar thermoplastic starch. By introducing the polybutylene adipate terephthalate (PBAT), it is possible to provide excellent biodegradability of the polyethylene, which is a base resin, while improving compatibility.

According to an embodiment of the present invention, the polybutylene adipate terephthalate (PBAT) has a weight average molecular weight of 10,000 to 100,000, and preferably 20,000 to 50,000.

According to an embodiment of the present invention, a melting temperature of the biodegradable resin composition is 100°C to 130°C, and a melt index of the resin composition is 0.01-10 g/10min at 2.16 kg at 190°C based on ASTM D1238. The melting temperature may be measured by differential scanning calorimetry (DSC) or dynamic mechanical analysis (DMA), which is a conventional measurement method, and the melt index (MI) is measured based on ASTM D1238.

According to an embodiment of the present invention, there is provided a biodegradable film including the biodegradable resin composition.

The film may be applied to at least one selected from industrial films, food films, agricultural films, and daily life films. The film provides improved biodegradability while providing mechanical properties provided by conventional plastics. Referring to FIG. 6, which will be described below, the excellent degradability of the film can be confirmed. Therefore, after the film is used, the film may be composted at a facility with certain conditions. In addition, the emission of harmful substances, such as dioxins, can be minimized because the amount of heat generated is low even when inevitably burned.

According to an embodiment of the present invention, the film may have a thickness of 20-40 µm, and preferably 30 µm.

On the other hand, the method for producing the biodegradable resin composition, including the composition, is as follows. In addition, the same description as the above-described biodegradable resin composition may be applied, and redundant descriptions will be omitted.

According to an embodiment of the present disclosure, there is provided a method for producing a biodegradable resin composition, the biodegradable resin composition including 40-60 wt% of polyethylene, 15-40 wt% of a biodegradable resin, and 15-40 wt% of polybutylene adipate terephthalate (PBAT), the biodegradable resin composition being produced by melt blending. Preferably, the biodegradable resin composition is provided by including 40-60 wt% of polyethylene, 20-40 wt% of a biodegradable resin, and 15-30 wt% of polybutylene adipate terephthalate (PBAT).

According to an embodiment of the present invention, the melt blending is provided using at least one selected from an extruder, a kneader, a Brabender Plasticorder, a mixing roll, and a mixer.

According to an embodiment of the present invention, the extruder is provided using one or more selected from a single-screw extruder, a twin-screw extruder, and a single-screw and twin-screw extruder. Preferably, the twin-screw extruder may provide excellent kneading properties and easy processability.

According to an embodiment of the present invention, the process may be performed by optimizing process conditions according to various raw materials to be input in the melt blending. A melting temperature may be in a range of 100°C to 300°C, and preferably 160°C to 210°C, and a rotating speed of the extruder screw may be in a range of 40 rpm to 700 rpm, and preferably 100 rpm to 200 rpm.

## Claims

1. A biodegradable resin composition comprising polyethylene in an amount ranging from 40-60 wt%, 15-40 wt% of a biodegradable resin, and 15-40 wt% of polybutylene adipate terephthalate (PBAT),
wherein the biodegradable resin comprises at least one selected from thermoplastic starch (TPS), polylactic acid (PLA), polycaprolactone (PCL), polybutylene succinate (PBS), polyglycolic acid (PGA), polyhydroxyalkanoate (PHA), polyhydroxybutyrate (PHB), cellulose, and chitin, and
wherein the biodegradable resin composition has a weight change of 20% or more, wherein the weight change is determined as described in the description.

2. The biodegradable resin composition of claim 1, wherein the polyethylene comprises at least one selected from high density polyethylene (HDPE), low density polyethylene (LDPE), medium density polyethylene (MDPE), linear low density polyethylene (LLDPE), and ethylene-vinyl acetate copolymer (EVA).

3. The biodegradable resin composition of claim 1, wherein the thermoplastic starch comprises at least one selected from rice starch, wheat starch, corn starch, sweet potato starch, potato starch, tapioca starch, cassava starch, and modified starches thereof.

4. The biodegradable resin composition of claim 1, wherein the polyethylene has a weight average molecular weight of 100,000 to 1,000,000.

5. The biodegradable resin composition of claim 1, wherein the polybutylene adipate terephthalate (PBAT) has a weight average molecular weight of 10,000 to 100,000.

6. The biodegradable resin composition of claim 1, wherein a melting temperature of the biodegradable resin composition is 100°C to 130°C, and a melt index of the biodegradable resin composition is 0.01-10 g/10min at 2.16 kg at 190°C based on ASTM D1238.

7. A biodegradable film comprising the biodegradable resin composition according to any one of claims 1 to 6.

8. The biodegradable film of claim 7, wherein the film is applicable to at least one selected from industrial films, food films, agricultural films, and daily life films.

9. A method for producing a biodegradable resin composition, the biodegradable resin composition comprising polyethylene in an amount ranging from 40-60 wt%, 15-40 wt% of a biodegradable resin, and 15-40 wt% of polybutylene adipate terephthalate (PBAT), the biodegradable resin composition being produced by melt blending,
wherein the biodegradable resin comprises at least one selected from thermoplastic starch (TPS), polylactic acid (PLA), polycaprolactone (PCL), polybutylene succinate (PBS), polyglycolic acid (PGA), polyhydroxyalkanoate (PHA), polyhydroxybutyrate (PHB), cellulose, and chitin, and
wherein the biodegradable resin composition has a weight change of 20% or more, wherein the weight change is determined as described in the description.

10. The method of claim 9, wherein the melt blending is carried out at 160°C to 210°C.

11. The method of claim 9, wherein the melt blending uses at least one selected from an extruder, a kneader, a Brabender Plasticorder, a mixing roll, and a mixer.

12. The method of claim 11, wherein the extruder uses one or more selected from a single-screw extruder, a twin-screw extruder, and a single-screw and twin-screw extruder.

## Patentansprüche

1. Biologisch abbaubare Harzzusammensetzung, umfassend Polyethylen in einer Menge von 40 bis 60 Gew.-%, 15 bis 40 Gew.-% eines biologisch abbaubaren Harzes und 15 bis 40 Gew.-% Polybutylenadipatterephthalat (PBAT),
wobei das biologisch abbaubare Harz mindestens eine Verbindung, ausgewählt aus den folgenden Verbindungen umfasst: thermoplastische Stärke (TPS), Polymilchsäure (PLA), Polycaprolacton (PCL), Polybutylensuccinat (PBS), Polyglykolsäure (PGA), Polyhydroxyalkanoat (PHA), Polyhydroxybutyrat (PHB), Cellulose und Chitin, und
wobei die biologisch abbaubare Harzzusammensetzung eine Gewichtsänderung von 20 % oder mehr aufweist, wobei die Gewichtsänderung wie in der Beschreibung angegeben bestimmt wird.

2. Biologisch abbaubare Harzzusammensetzung nach Anspruch 1, wobei das Polyethylen mindestens eines der folgenden umfasst: Polyethylen hoher Dichte (HDPE), Polyethylen niedriger Dichte (LDPE), Polyethylen mittlerer Dichte (MDPE), lineares Polyethylen niedriger Dichte (LLDPE) und Ethylen-Vinylacetat-Copolymer (EVA).

3. Biologisch abbaubare Harzzusammensetzung nach Anspruch 1, wobei die thermoplastische Stärke mindestens eine, ausgewählt aus den Folgenden enthält: Reisstärke, Weizenstärke, Maisstärke, Süßkartoffelstärke, Kartoffelstärke, Tapiokastärke, Maniokstärke und modifizierte Stärken davon.

4. Biologisch abbaubare Harzzusammensetzung nach Anspruch 1, wobei das Polyethylen ein gewichtsmittleres Molekulargewicht von 100.000 bis 1.000.000 aufweist.

5. Biologisch abbaubare Harzzusammensetzung nach Anspruch 1, wobei das Polybutylenadipatterephthalat (PBAT) ein gewichtsmittleres Molekulargewicht von 10.000 bis 100.000 aufweist.

6. Biologisch abbaubare Harzzusammensetzung nach Anspruch 1, wobei eine Schmelztemperatur der biologisch abbaubaren Harzzusammensetzung 100 °C bis 130 °C beträgt und ein Schmelzindex der biologisch abbaubaren Harzzusammensetzung gemäß ASTM D1238 bei 190 °C und einer Belastung von 2,16 kg 0,01 bis 10 g/10 min beträgt.

7. Biologisch abbaubare Folie, umfassend die biologisch abbaubare Harzzusammensetzung gemäß einem der Ansprüche 1 bis 6.

8. Biologisch abbaubare Folie nach Anspruch 7, wobei die Folie für mindestens eine der folgenden Anwendungen geeignet ist: Industriefolien, Lebensmittelverpackungsfolien, Agrarfolien und Folien für den täglichen Gebrauch.

9. Verfahren zur Herstellung einer biologisch abbaubaren Harzzusammensetzung, wobei die biologisch abbaubare Harzzusammensetzung Polyethylen in einer Menge von 40 bis 60 Gew.-%, 15 bis 40 Gew.-% eines biologisch abbaubaren Harzes und 15 bis 40 Gew.-% Polybutylenadipatterephthalat (PBAT) umfasst, wobei die biologisch abbaubare Harzzusammensetzung durch Schmelzmischen hergestellt wird,
wobei das biologisch abbaubare Harz mindestens eine Verbindung, ausgewählt aus den folgenden Verbindungen umfasst: thermoplastische Stärke (TPS), Polymilchsäure (PLA), Polycaprolacton (PCL), Polybutylensuccinat (PBS), Polyglykolsäure (PGA), Polyhydroxyalkanoat (PHA), Polyhydroxybutyrat (PHB), Cellulose und Chitin, und
wobei die biologisch abbaubare Harzzusammensetzung eine Gewichtsänderung von 20 % oder mehr aufweist, wobei die Gewichtsänderung wie in der Beschreibung angegeben bestimmt wird.

10. Verfahren nach Anspruch 9, wobei das Schmelzmischen bei 160 °C bis 210 °C durchgeführt wird.

11. Verfahren nach Anspruch 9, wobei beim Schmelzmischen mindestens eine, ausgewählt aus den folgenden Vorrichtungen verwendet wird: ein Extruder, ein Kneter, ein Brabender Plasticorder, eine Mischwalze und ein Mischer.

12. Verfahren nach Anspruch 11, wobei der Extruder eine oder mehrere, ausgewählt aus den folgenden Vorrichtungen verwendet: einen Einschneckenextruder, einen Doppelschneckenextruder und einen Einschnecken- und Doppelschneckenextruder.

## Revendications

1. Composition de résine biodégradable, comprenant du polyéthylène dans une quantité comprise dans une plage de 40-60 % en poids, 15-40 % en poids d'une résine biodégradable, et 15-40 % en poids de polybutylène adipate téréphtalate (PBAT),
dans laquelle la résine biodégradable comprend au moins un élément sélectionné parmi l'amidon thermoplastique (TPS), l'acide polylactique (PLA), la polycaprolactone (PCL), le polybutylène succinate (PBS), l'acide polyglycolique (PGA), le polyhydroxyalcanoate (PHA), le polyhydroxybutyrate (PHB), la cellulose, et la chitine ;
dans laquelle la composition de résine biodégradable présente une modification de poids de 20 % ou davantage, et dans laquelle la modification de poids est déterminée comme présenté dans la description.

2. Composition de résine biodégradable selon la revendication 1, dans laquelle le polyéthylène comprend au moins un élément sélectionné parmi du polyéthylène haute densité (HDPE), du polyéthylène basse densité (LDPE), du polyéthylène de moyenne densité (MDPE), du polyéthylène linéaire basse densité (LLDPE), et un copolymère d'éthylène-acétate de vinyle (EVA).

3. Composition de résine biodégradable selon la revendication 1, dans laquelle l'amidon thermoplastique comprend au moins un élément sélectionné parmi l'amidon de riz, l'amidon de blé, l'amidon de maïs, la fécule de patate douce, la fécule de tapioca, la fécule de manioc, et des amidons modifiés de ceux-ci.

4. Composition de résine biodégradable selon la revendication 1, dans laquelle le polyéthylène présente un poids moléculaire moyen en poids allant de 100 000 à 1 000 000.

5. Composition de résine biodégradable selon la revendication 1, dans laquelle le polybutylène adipate téréphtalate (PBAT) présente un poids moléculaire moyen en poids allant de 10 000 à 100 000.

6. Composition de résine biodégradable selon la revendication 1, dans laquelle une température de fusion de la composition de résine biodégradable s'étend de 100 °C à 130 °C, et un indice de fluidité à chaud de la composition de résine biodégradable s'étend sur 0,01-10 g/10 min à 2,16 kg à 190 °C sur la base de la norme ASTM D1238.

7. Film biodégradable comprenant la composition de résine biodégradable selon l'une quelconque des revendications 1 à 6.

8. Film biodégradable selon la revendication 7, dans lequel le film est applicable à au moins un élément sélectionné parmi les films industriels, les films alimentaires, les films à usage agricole, et les films destinés à la vie quotidienne.

9. Procédé destiné à produire une composition de résine biodégradable, la composition de résine biodégradable comprenant du polyéthylène dans une quantité comprise dans une plage de 40-60 % en poids, 15-40 % en poids d'une résine biodégradable, et 15-40 % en poids de polybutylène adipate téréphtalate (PBAT), la composition de résine biodégradable étant produite par mélange à l'état fondu,
dans lequel la résine biodégradable comprend au moins un élément sélectionné parmi l'amidon thermoplastique (TPS), l'acide polylactique (PLA), la polycaprolactone (PCL), le polybutylène succinate (PBS), l'acide polyglycolique (PGA), le polyhydroxyalcanoate (PHA), le polyhydroxybutyrate (PHB), la cellulose, et la chitine ;
dans lequel la composition de résine biodégradable présente une modification de poids de 20 % ou davantage, et dans lequel la modification de poids est déterminée comme présenté dans la description.

10. Procédé selon la revendication 9, dans lequel le mélange à l'état fondu est réalisé entre 160 °C et 210 °C.

11. Procédé selon la revendication 9, dans lequel le mélange à l'état fondu utilise au moins un élément sélectionné parmi une extrudeuse, un malaxeur, un Brabender Plasticorder, un laminoir, et un mélangeur.

12. Procédé selon la revendication 11, dans lequel l'extrudeuse utilise un ou plusieurs éléments sélectionnés parmi une extrudeuse à vis simple, une extrudeuse à vis double, et une extrudeuse à vis simple et à vis double.
